# EUROPEAN PATENT APPLICATION

(11) **EP 4 253 795 A1**
(43) Date of publication of application: **04.10.2023**
(21) Application number: 22165251.4
(22) Date of filing: 29.03.2022
(51) Int. Cl.: F16H 25/06, F03D 15/10

(54) **TRANSMISSION FOR A WIND TURBINE**

(71) Applicant: VESTAS WIND SYSTEMS A/S, 8200 Aarhus N (DK)
(72) Inventor: PIEL, Daniel, Holzwickede (DE); BAGER, Christian, Herne (DE); WEBER, Andreas, Dortmund (DE)
(74) Representative: Vestas Patents Department

(57) **Abstract**

A transmission which may find particular utility in wind turbine application, but may also be used in other applications. The transmission comprises a fixed gear ring, a first drive member rotationally supported within the fixed gear ring, the first drive member defining a plurality of radially arranged apertures or bores, each of which accommodates a tooth element. The tooth elements have a tooth tip and a tooth base, and the first drive member further comprises a radially outer face and a radially inner face, and wherein the tooth tips of the tooth elements engage a corresponding gear profile defined by the fixed gear ring. The transmission further comprises a second drive member which is rotationally supported such that it extends within the first drive member, the second drive member defining a cam profile which engages each of the plurality of tooth elements, and wherein the first drive member further comprises one or more interior chambers. Beneficially, the invention involves configuring the first drive member or 'tooth carrier' of the transmission to reduce its mass, which thereby reduces the manufacturing cost of the transmission and provides great benefits in terms of reducing nacelle weight in the context of a wind turbine.

## Description

### Technical Field

The present invention relates to a transmission in a powertrain assembly, particularly for a wind turbine.

### Background to the Invention

Wind turbines convert kinetic energy from the wind into electrical energy, using a large rotor with a number of rotor blades. A typical Horizontal Axis Wind Turbine (HAWT) comprises a tower, a nacelle on top of the tower, a rotor hub mounted to the nacelle and a plurality of wind turbine rotor blades coupled to the rotor hub. Depending on the direction of the wind, the nacelle and rotor blades are turned and directed into an optimal direction by a yaw system for rotating the nacelle and a pitch system for rotating the blades.

The nacelle houses many functional components of the wind turbine, including for example a main rotor shaft and one or more electrical generator, as well as convertor equipment for converting the mechanical energy at the rotor into electrical energy for provision to the grid. In some types of wind turbines, known as 'direct drive' systems, the main rotor shaft drives the electrical generator directly. However, it is more common for wind turbines to include a gearbox to step up the rotational speed between the main rotor shaft and the electrical generator, thus converting the low speed but high torque input from the main rotor shaft to a lower torque but higher speed input into the electrical generator. Together, the main rotor shaft, gearbox and generator constitute a power train of the wind turbine.

Typically, gearboxes for wind turbines include parallel gearboxes, epicyclic gearboxes, or a combination of both designs, and provide gear ratios between 1:30 and 1:140. Such high gear ratios usually require more than one gear stage which increases the size of the gearbox, and also its overall mass and cost. The mass of the gearbox contributes significantly to the overall mass of the nacelle, so it is desirable to reduce this mass to reduce the pendulum effect of the nacelle mass on top of the wind turbine tower which may reach over 100m in height, and even up to and over 160m in height.

Gear system designs with more compact layouts are known. One such gear system is known as a strain wave drive system or 'harmonic drive', and is well-known in small scale applications such as robotic joints and wheel motors. However, such systems are used as speed reducers and are generally not considered compatible as speed increasers due to issues with torque loading.

Another type of compact gear system is disclosed in US8656809B2 and US8256327B2, to Wittenstein Group. Such a gear system includes a speed reducer arrangement that features a plurality of circumferentially arranged teeth each of which is configured to move radially in a tooth carrier member. The bases of the teeth are driven by a rotatable cam member which constitutes an input drive, whilst the tips of the teeth engage on an outer ring with an inner tooth profile. The number of radially or slidably movable teeth differ from the number of teeth shapes in the ring tooth profile which causes the tooth carrier member to move at a slower rate than the input drive member. The tooth carrier member therefore constitutes an output drive member. Such 'radial-moving-teeth' gearbox designs are able to achieve a high-speed reduction ratio between 1:10 and 1:200.

Gear systems based on radial-moving-teeth designs generally are not reverse driven largely due to reduced efficiency when operated in the reverse driven direction. There are various technical challenges associated with configuring a radial-moving tooth design gearbox to be used as a speed increasing transmission, particularly in high torque applications, at least some of which the invention discussed herein is directed to address.

### Summary of the Invention

According to a first aspect of the invention, there is provided a transmission which may find particular utility in wind turbine application, but may also be used in other applications. The transmission comprises a fixed gear ring, a first drive member rotationally supported within the fixed gear ring, the first drive member defining a plurality of radially arranged apertures or bores, each of which accommodates a tooth element. The tooth elements have a tooth tip and a tooth base, and the first drive member further comprises a radially outer face and a radially inner face, and wherein the tooth tips of the tooth elements engage a corresponding gear profile defined by the fixed gear ring. The transmission further comprises a second drive member which is rotationally supported such that it extends within or through the first drive member, the second drive member defining a cam profile which engages each of the plurality of tooth elements, and wherein the first drive member further comprises one or more interior chambers. Beneficially, the invention involves configuring the first drive member or 'tooth carrier' of the transmission to reduce its mass, which thereby reduces the manufacturing cost of the transmission and provides great benefits in terms of reducing nacelle weight in the context of a wind turbine. It should be noted that the at least one interior chamber is in addition to the radially arranged apertures that support and guide the tooth elements.

In one example, the transmission may form part of a speed increasing gearbox where rotation of the first drive member causes radial movement of the tooth elements by engagement with the fixed ring gear.

In another aspect, the examples of the invention provide a wind turbine including a tower on which is mounted a nacelle that supports a rotatable hub, wherein the rotatable hub is coupled to a transmission as defined above.

Preferred and/or optional features of the invention are set out in the appended claims.

### Brief Description of the Drawings

The present invention will now be described, by way of example only, with reference to the attached drawings, in which:
Figure 1 is a perspective view of a horizontal-axis wind turbine within which the invention may be incorporated;
Figure 2 is a perspective view of a power transmission system for the wind turbine in Figure 1, which includes a main shaft, a gearbox or transmission, and an electrical generator;
Figure 3 is an exploded perspective view of the transmission of the system shown in Figure 2;
Figure 4 is a view transversely through the transmission showing the arrangement of main components;
Figures 5a-c are a series of views showing a gear tooth element of the transmission and an associated pivot/tilt pad;
Figures 6a-c are a series of views that show the progress of one of the gear tooth elements of the transmission during a load cycle;
Figure 7, Figures 8a, and 8b show an alternative configuration of gear tooth element for use with a transmission as shown in the previous Figures,
Figures 9 shows an example of a drive member or component of the transmission in the previous Figures, for comparison with Figure 10, which shows a drive member in accordance with the invention;
Figures 11 to 13 illustrate aspects of the inventive concept in more detail;
Figures 14 and 15 are views of further applications for a transmission according to the invention.

### Detailed Description

A specific embodiment of the present invention will now be described in which numerous features will be discussed in detail in order to provide a thorough understanding of the inventive concept as defined in the claims. However, it will be apparent to the skilled person that the invention may be put into effect without the specific details and that in some instances, well known methods, techniques and structures have not been described in detail in order not to obscure the invention unnecessarily.

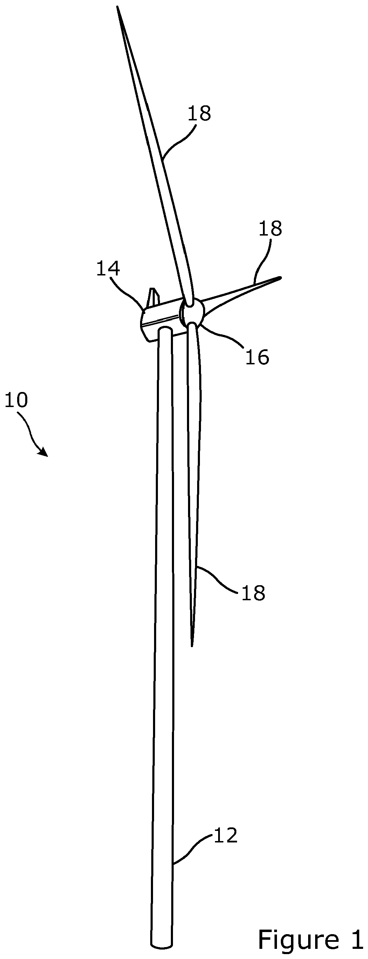

In order to place the embodiments of the invention in a suitable context, reference will firstly be made to Figure 1, which illustrates a typical Horizontal Axis Wind Turbine (HAWT) in which a generator rotor assembly according to an embodiment of the invention may be implemented. Although this particular image depicts an on-shore wind turbine, it will be understood that equivalent features will also be found on off-shore wind turbines. In addition, although the wind turbines are referred to as 'horizontal axis', it will be appreciated by the skilled person that for practical purposes, the axis is usually slightly inclined to prevent contact between the rotor blades and the wind turbine tower in the event of strong winds.

The wind turbine 10 comprises a tower 12, a nacelle 14 rotatably coupled to the top of the tower 12 by a yaw system (not shown), a rotor hub 16 mounted to the nacelle 14 and a plurality of wind turbine rotor blades 18 coupled to the rotor hub 16. The nacelle 14 and rotor blades 18 are turned and directed into the wind direction by the yaw system.

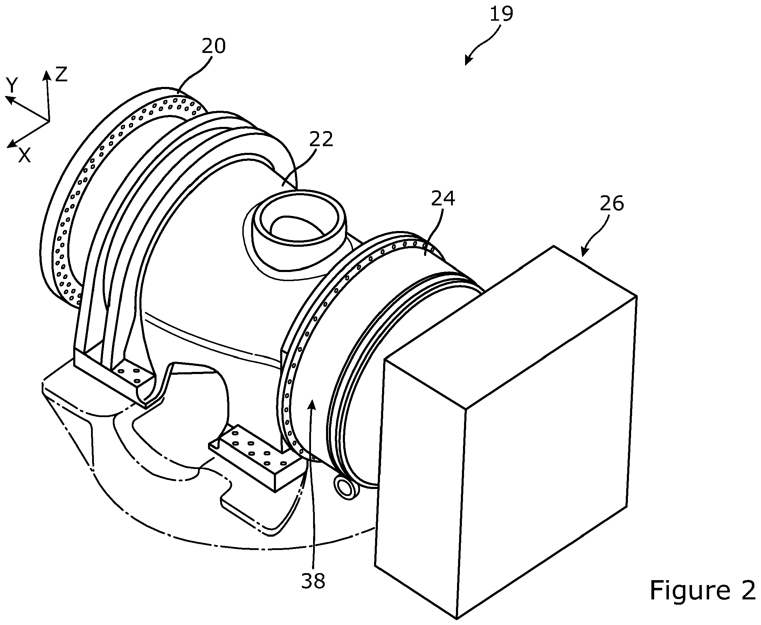

The nacelle 14 houses many functional components of the wind turbine, including the main rotor shaft, generator, gearbox, and power converter for converting the mechanical energy of the wind into electrical energy for provision to the grid. Together, these components are generally referred to as the powertrain of the wind turbine, whereas the gearbox and generator are generally referred to as the drivetrain. Figure 2 illustrates an example of a layout of part of a powertrain 19 within the nacelle 14, that layout including a main shaft 20, which extends through a main bearing housing 22, a gearbox 24 and a generator 26. The main shaft 20 is connected to, and driven by, the rotor hub 16 and provides input drive to the gearbox 24.

The gearbox 24 steps up the rotational speed of the low-speed main shaft via internal gears (not shown) and drives a gearbox output shaft (also not shown). The gearbox output shaft in turn drives the generator 26, which converts the rotation of the gearbox output shaft into electricity. The electricity generated by the generator 26 may then be converted by other components (not shown) as required before being supplied to an appropriate consumer, for example an electrical grid distribution system.

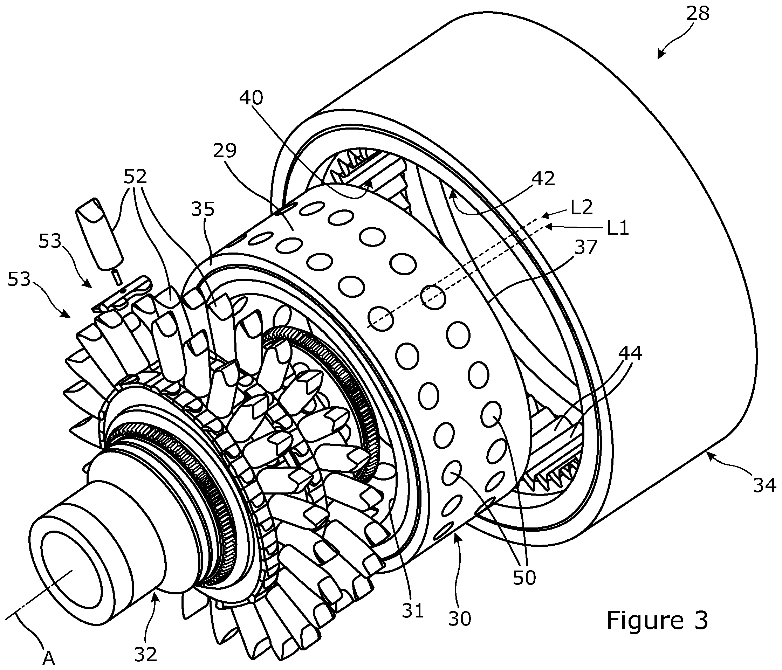

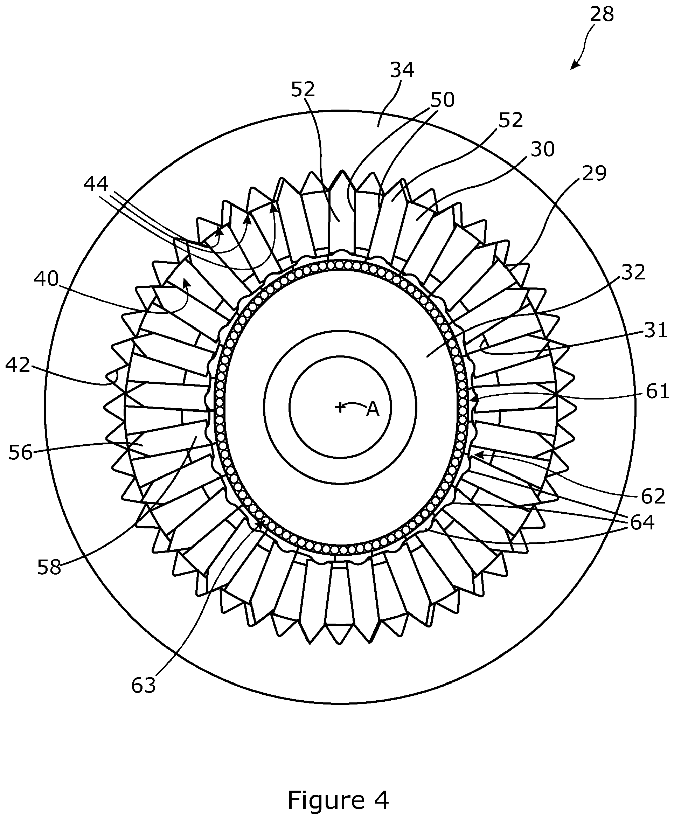

Aspects of the gearbox are shown in more detail in Figure 3 and Figure 4. Figure 3 illustrates the general arrangement of various components of the gearbox 24, as an exploded view, whilst Figure 4 shows the relative positioning of the internal components of the gearbox. Hereinafter, the gearbox components will be referred to generally as a transmission 28.

The transmission 28 comprises three main components: an input drive member 30, or 'tooth carrier', an output drive member 32, and an outer gear ring 34. The transmission 28 is configured to increase the speed of rotation between the input drive member 30 and the output drive member 32. In this context, the input drive member 30 would be coupled to the main rotor shaft 20 of the wind turbine, and the output drive member 32 would be coupled to a rotor of the electrical generator 26. The main components of the transmission as discussed above may be made of a suitable material, for example a suitable grade of cast or forged steel. In lower load applications, the components may be made from other materials such as suitable engineering plastics. The selection of the exact material for a particular application would be within the abilities of a skilled person.

At this point it should be noted that the general arrangement of the transmission is similar to the so-called "Galaxie" (RTM) drive system manufactured by Wittenstein Group. This type of system is sometimes referred to in the art as a 'radial-moving-tooth' or 'slidable tooth' design, and fundamentals of the technology are described in US8656809B2 and US8256327B2, amongst others. However, such drive systems tend to be used in speed reduction applications with lighter loading and with relatively short working lives, whereas in the current context the intention is for the transmission to be used in high loading applications as a speed increaser to convert the relatively high torque and low speed input drive from the main rotor of the wind turbine (approx. 5-15 rpm) to a lower torque but higher speed output drive for the gearbox (approximately 100-1000rpm). Moreover, in wind turbine applications, gearboxes tend to be in operation for longer time periods compared to other applications, for example usually wind turbines have a working life of 25 years.

Returning to Figure 3 and 4, the outer gear ring 34 is a rotationally fixed component which is associated with or formed as part of a main housing 38 (see in Figure 2) of the gearbox 24. Therefore, the outer gear ring 34 is in a rotationally fixed relation to the nacelle of the wind turbine.

The outer gear ring 34 is configured to define an internal gear profile 40 about its radial interior surface 42. The gear profile 40 extends circumferentially about the rotational axis of the transmission. The gear profile 40 is defined by a plurality of gear tooth sections 44 or more simply 'gear sections'.

It should be noted that the outer profile of each gear section 44 is shaped to define part of a logarithmic profile, which is a benefit in terms of force transmission with tooth members of the transmission, as will now be discussed. The precise tooth geometry is not the focus of the invention, however, and so further discussion will be omitted for clarity.

The input member 30 is configured to rotate within the space defined by the outer gear ring 34. Similarly, the output member 32 is rotationally supported such that it extends within or through the input member 30 so it is able to rotate therein.

The input member 30 is associated with and is physically connected to the main shaft of the wind turbine and so rotates at the same speed. It should be appreciated that the input member 30 is not shown connected to the main shaft in the drawings. However, the input member 30 comprises a set of bolt holes on its axial surface which serve to define a connecting interface for the main shaft, or to an intermediate coupling member to couple the input member 30 to the main shaft. It should be noted that the input member 30 could also be connected to the main shaft by way of a press fit connection such as a shrink disk.

The input member 30 is annular in form and defines a radially outer facing surface 29, a radially inward facing surface 31, and first and second axial facing surfaces, 35,37. The input member 30 is configured to define a circumferentially-spaced arrangement of apertures, bores or holes 50, each of which accommodates a respective gear tooth element 52. The apertures 50 therefore act as guides for the respective tooth elements 52 and so can be considered to be guide bores, and may be referred to as such herein. The radial depth/dimension of the apertures 50 are less than the axial length of the gear tooth element so that the tips of the gear tooth elements protrude from the top surface of the input member 30. It should be noted that only two of the gear tooth elements 52 and respective apertures 50 are labelled in Figure 4 so as not to obscure detail in the Figure. The precise number of gear tooth elements 52 and respective apertures 50 is not the subject of this invention and so will not be described in detail here. However, the number may vary between about 20 and 200. Moreover, the number of gear tooth elements and gear sections may be selected to vary the gear ratio between the input member 30 and the output member 32, and also to select the relative direction of rotation between the input member 30 and the output member 32.

As is known generally in the art, the input member 30 and the output member 32 may rotate in the same direction, albeit at different rotational speeds, or they may rotate in opposite directions, and the direction of rotation is determined by the relative number of gear tooth elements 52 in the input member 30 and the number of gear sections 44 in the outer gear ring 34. Reference is made to US10830328 which discusses more details relating to the interrelation between the number of gear sections 44 and the number of slidable tooth elements 52.

The input member 30 may be configured to have a single row of apertures 50 and gear tooth elements 52. However, in the illustrated example the input member 30 has two rows 53 of apertures 50 and gear tooth elements 52, spaced appropriately along the axial direction of the transmission. Further rows are possible, although not currently envisaged. In this context, the discussion above about the numbers of teeth in a row, would apply to each row. Note that the rotational axis of the transmission is indicated in Figures 3 and 4 as 'A'. This axis preferably coincides with the axis Y in Figure 2.

As shown in Figure 3, each row of apertures 50 is spaced circumferentially about the input member 30 in an angularly equi-spaced relationship. The angular interval between apertures 50 in the rows is the same for each row in the illustrated embodiment, and may be between 2 and 20 degrees, for example, depending on the number of tooth elements. However, in theory there may be different numbers of apertures 50, and therefore tooth elements 52, in each row. In the illustrated example, where there are equal numbers of apertures 50 and tooth elements 52 in the rows, the apertures 50 in one row are angularly shifted from the apertures 50 in the other one of the rows. This can be appreciated by observing the line L1 which is taken through the centre of one of the apertures 50 in one of the rows, and line L2 which is taken through the centre of the nearest aperture 50 in the other row. As can be seen, there is a small angular shift between the apertures 50 in the two rows. The angular shift may be up to 50% of the angular interval between adjacent apertures 50. For example, the angular shift may be 5% or 10% or 20% or 30% or 40% of the angular interval between a neighbouring two apertures 50 in a particular row. For example, for a row with 30 apertures, the angular interval would be 12 degrees. The angular shift between apertures in adjacent rows may therefore be up to 6 degrees.

The rotating action of the input member 30 causes the respective gear tooth elements 52 to be driven radially inwardly by the gear profile 40 since they are slidable within the apertures 50. Since the number of gear tooth elements 52 does not match the number of gear sections 44 of the gear profile 40, the result is that each of the gear tooth elements 52 is at a different radial lift height within its respective aperture 50. This imparts a wavelike pattern of motion of the gear tooth elements 52 which in turn imparts a rotational drive force to the output member 32, as will now be described.

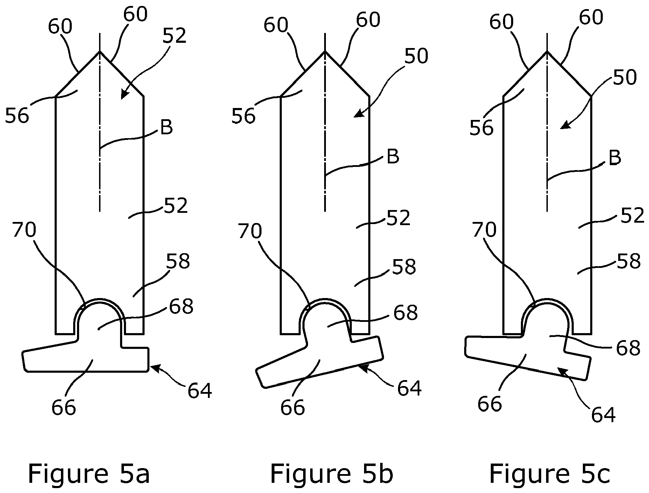

Referring to the gear tooth elements 52 in more detail, and also with reference to Figures 5a-c, it will be seen that each gear tooth element 52 includes a tooth tip region 56 and a tooth base region 58, both of which are aligned on a tooth axis B. The tooth tip region 56 is positioned radially outwardly with respect to the tooth base region 58. A tooth body 59 extends between the tooth base and the tooth tip region 56 Although not seen clearly in Figure 3 and 4, it should be appreciated that the shape of the tooth tip region 56 is configured to compliment the shape of the respective gear section 44 of the outer ring gear 34. Each flank 60 of a tooth tip region 56 may shaped to define a substantially flat surface, in the illustrated example, although in other examples the flanks may define a part of a logarithmic spiral or have some degree of curvature.

Whereas the tooth tip regions 56 of the gear tooth elements 52 engage with the gear profile 40 of the outer ring member 34, the tooth base regions 58 of the gear tooth elements 52 engage with the output member 32.

As can be seen in Figure 4 particularly well, the output member 32 has a non-circular shaped circumferential outer surface 61. More specifically the shape is oval in the illustrated example. The output member 32 is therefore cam-shaped in form so as to provide a shaft cam drive with two cam peaks, in this example. Other examples may provide a single cam peak or more than two cam peaks. It is the shape of the output drive member 32 that allows the gear tooth elements 52 to drive it with a rotational motion.

In order to reduce friction between the gear tooth elements 52 and the output drive member 32, there is provided a bearing arrangement 62.

The bearing arrangement 62 comprises a plurality of pivot pads 64, only some of which are labelled in Figure 4. Each of the pivot pads 64 is associated with a respective one of the gear tooth elements 52 and acts as a fulcrum against which bears a respective base region 58 of a gear tooth element 52. The gear tooth elements 52 therefore engage the cam surface of the output member 52 to transmit a force thereto thereby acting on and driving the output member. However, the tooth element 52 act on the cam surface indirectly in this example by bearing against the pivot pads 64, although the term 'engage', 'act on' and 'driven by' in this context are considers to cover both direct engagement and also indirect engagement via the pivot pads or other functionally equivalent bearing type element.

The action of a pivot pad 64 is shown schematically in Figures 5a-c. As can be seen the pivot pad 64 includes a pad portion 66 and a pivot or fulcrum portion 68. The pivot portion 68 protrudes upwardly from the pad portion 66 and is shaped to complement a recess 70 defined in the underside of the base region 58 of the gear tooth element 52. The pivot portion 68 may define a part-spherical or part-cylindrical protrusion. The precise geometry is not crucial to the Invention but it should allow the pivot pad 64 to pivot smoothly with respect to the gear tooth element 52, as can be seen in the Figures, in which Figure 5a shows the pivot pad 64 in a neutral position, and Figure 5b and 5c show the pivot pad 64 tilted to the left and to the right, respectively.

The pivot pads 64 are arranged to extend about the circumferential outer surface of the output member 32. Each pivot pad 64 is associated with a respective gear tooth element 52. Since the pivot pads 64 slide on the outer surface of the output member 32, a suitable means may preferably be provided to aid lubrication between those components. This may be fulfilled by a low friction coating on the underside of the pivot pads 64 and/or a low friction coating on the outer surface of the output member 32. Alternatively, the pivot pads 64 may be mounted on a suitable sliding bearing or roller bearing train 63 (c.f. Figure 4). The pivot pads 64 may be suitably coupled to one other. To constrain the pivot pads from moving about on the output drive member 32 in the axial direction, the pivot pads 64 may be received in a shallow guide channel (not shown) defined in the outer surface of the output member 32, or other functionally similar arrangement.

The benefit of the pivot pads is that they transmit the linear driving force vectors generated by the individual tooth elements more effectively into the cam-like surface of the output member 32 as that surface undulates beneath the pivot pad 64.

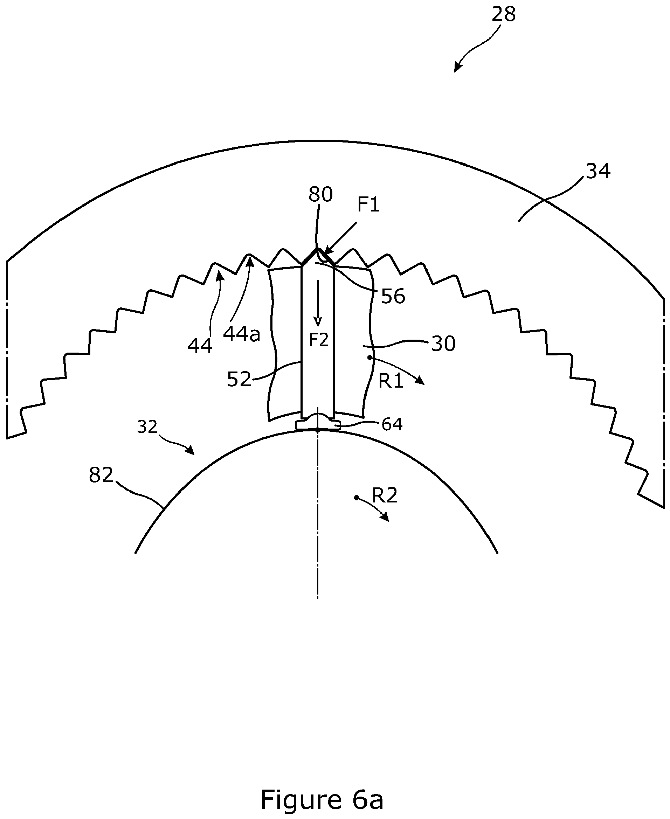

By way of further explanation, Figures 6a to 6c are a sequence of drawings that illustrates a short rotational phase of the input member 30 and the output member 32. In these Figures, only a single one of the gear tooth elements 52 are shown for the sake of clarity. However, from viewing Figures 6a to 6c, the relative movement of the input drive member 30 and the gear tooth element 52 is apparent, as is the effect that the force applied to the gear tooth element 52 has on the output member 32.

Referring firstly to Figure 6a, this can be considered a reference position at the start of a tooth loading cycle where the tip region 56 of the gear tooth element 52 is located in a trough 44a of a gear tooth section 44. It should be noted that the outer ring gear 34 is stationary, whilst the input member 30 and the output member 32 rotate relative to it, but at different rotational speeds. The direction of rotation of the input drive member 30 is labelled as R1 in Figure 6a, and can be seen as being clockwise in this example. Similarly, the direction of rotation of the output member 32 is labelled as R2, and is also clockwise, in this example. As noted above, the input and output members 30,32 may be configured to rotate in opposite directions in some examples.

At this point, it will be noticed that although a single gear tooth element 52 is shown, the input drive member 30 is shown in partial form for clarity. The movement of the input drive member 30 can be appreciated by the movement of the gear tooth element 52 relative to the outer gear ring 34 by comparing the position of the gear tooth element 52 with the gear section 44 with which it is engaged in Figures 6a-6c. Notably, in Figure 6a the output member 32 is in a rotational position at which the height of the cam shape is at a maximum. The cam shape provided by the output member 32 can therefore be considered as in a top dead centre position in Figure 6a.

As the input member 30 is driven in a clockwise direction, a force will be exerted on the tip region 56 of the gear tooth element 52 by a rising flank 80 of the gear tooth section 44. This force is shown on Figure 6a as F1. A component of force F1 will be in the vertically downwards direction (in the orientation of the drawings), and is shown here as F2. The gear tooth element 52 will therefore start to exert a force on the cam shaped surface of the output drive member 32 via the pivot pad 64 as the output member 32 rotates, and as the gear tooth element 52 passes the top position as shown in Figure 6a.

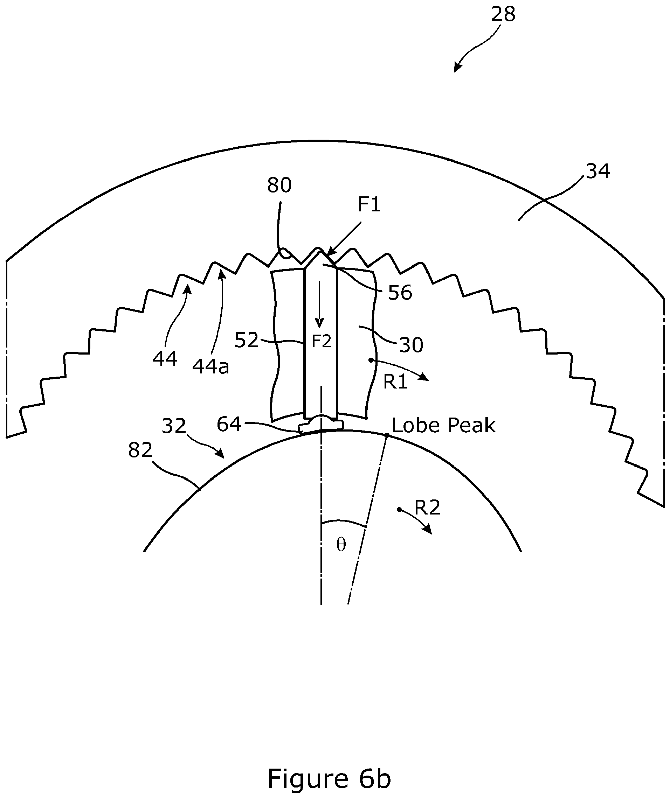

Comparing Figure 6b with Figure 6a, it will be seen in Figure 6b that the output member 32 has rotated in the clockwise direction by an angle Θ of about 20 degrees. Conversely, the gear tooth element 52 has only moved relative to the outer ring member 34 by a small fraction of a degree, which illustrates the speed increasing configuration of the transmission 28.

As can be seen, the cam shape of the output member 32 has changed position in Figure 6b such that the vertical force F2 applied by the gear tooth element 52 via the pivot pad 64 now acts on a falling slope 82 of the cam shape. The gear tooth element 52, therefore contributes a rotational force to the output drive member 32, which combines with the forces generated by the other gear tooth elements to drive the output member 32 in rotation.

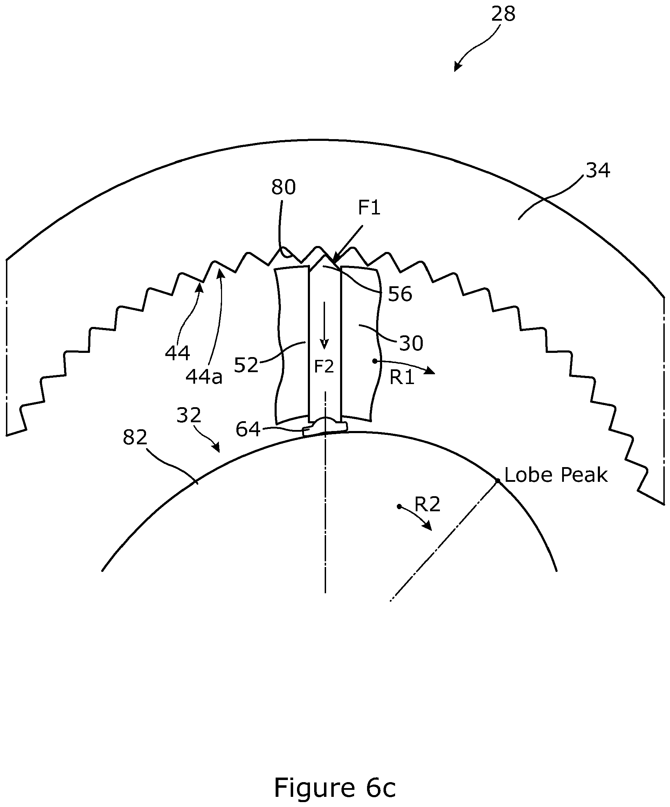

Figure 6c is substantially the same as Figures 6a and 6b, although shows the gear tooth element 52 a step further along its loading cycle. Once the gear tooth element 52 has gone through a load cycle, as shown, it is driven outwardly by the cam surface of the output member 32 and is not loaded during this movement.

Having described the general arrangement of the transmission 28, the discussion will now focus on various aspects associated with a particular design of tooth element 52 for the transmission 28.

In the examples of the invention discussed above, various features of tooth elements have been described and shown. In general, the tooth elements comprise a cylindrical tooth body which transitions to a tapered tooth tip or head region which terminates at a tip or point. The tooth body in the illustrated examples are cylindrical and match the tooth apertures/guides so they can slide relative thereto. Although the tooth elements and apertures/guides are shown as having a circular cross section, other cross sections are acceptable in principle.

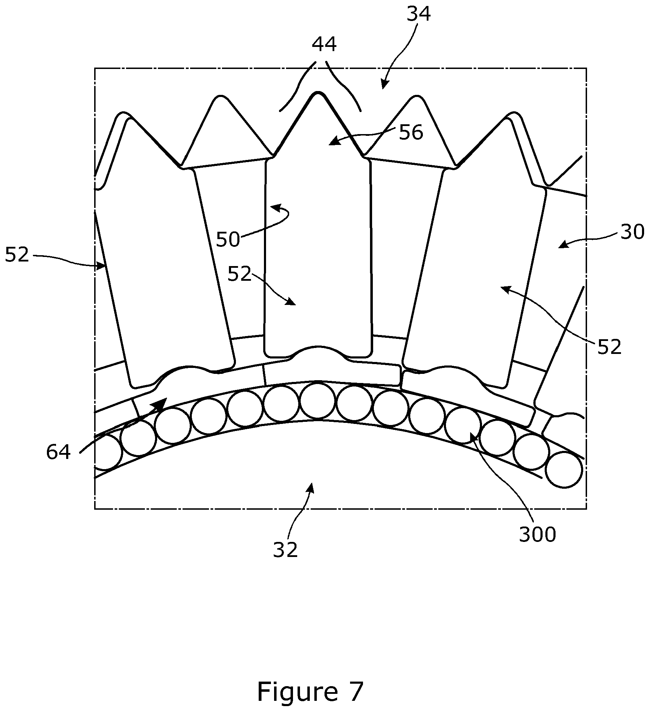

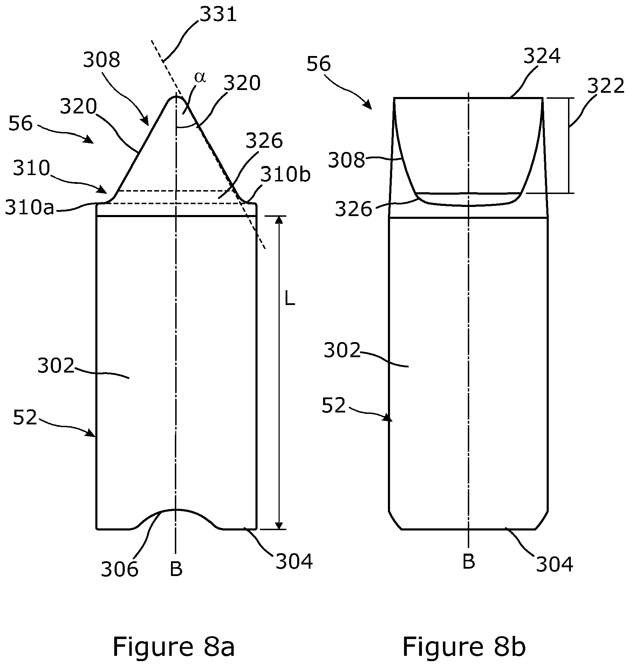

Another form of tooth element is shown in Figure 7 and Figures 8a and 8b. The same reference numerals will be used in these Figures to refer to features in common and/or equivalent with the previously illustrated examples.

In Figure 7, three tooth elements 52 are shown in their respective aperture 50 of the input member 30. The outer gear ring 34 is also shown in part, as is the output member 32, together with the pivot pads 64 and a bearing layer 300 that is intermediate the outer surface of the output member 32 and the pivot pads 64. It will be appreciated that the tooth member 52 shown in the centre of the image is in a 'top dead centre' position relative to its respective gear tooth section 44, whereas the other tooth elements 52 are in in slightly laterally shifted positions.

With reference also to Figures 8a and 8b, it will be apparent that the tip region 56 is shaped differently to the previous examples.

The tooth element 52 comprises a tooth body 302 having a tooth base 304 which is configured for engagement with an adjacent pivot pad 64 (not shown in Figs 8a/b) by virtue of a recess 306 defined therein.

The tooth tip region 56 is adjacent the tooth body 302 distal from the tooth base 304. The tooth tip region 56 is defined by a flank section 308 that is demarked from the tooth body 302 by a shoulder 310. As seen in Figure 8a, there is provided a left shoulder 310a and a right shoulder 310b.

The shoulders 310 are intermediate the top of the tooth body 302 and the flank section 308 of the tip region 56. The shoulders 310 and flank section 308 together form the tooth tip region 56 of the tooth element 52.

Over a body length L along the longitudinal axis B of the tooth element 52, the tooth body 302 has a substantially constant cross-section, which is circular in this example, although this need not be the case and other cross sectional profiles are acceptable. Where the cross section is not circular, that cross section profile may be substantially constant along the longitudinal length of the tooth body 302. The tooth body 302 is in contact with the tooth aperture 50 or "guide" of the input member 30 over the length of the tooth body 302 and so forces can be transmitted between the tooth element 52 and the respective aperture via the contact surfaces, contact lines or contact points.

The flank section 308 comprises tooth flanks 320, which can engage with the corresponding surfaces of the gear tooth sections 44 on the outer gear ring 34.

Figure 8b shows the tooth element 52 when viewed perpendicularly from a tooth flank 320. It will be apparent that the tooth flank 320 is a predominantly flat surface that extends from the tip of the tooth towards the tooth body 302, and particularly the shoulder 312.

The tooth flanks 320 comprise a straight substantially planar section, labelled as 322, and first/second transition sections 324, 326. The substantially planar section 322 may have some curvature, although it is shown as planar in the figures. The first transition section 324 is located towards the tip end of the flank 320 and extends towards the tip to provide a somewhat rounded end rather than a sharp tip shape, thereby reducing stress concentrations. The second transition section 326 is located at the other end of the flank 320 and merges into the shoulder 310.

The flanks 320 define an angle with respect to the tooth axis B. As shown, the angle α of each flank is around 30 degrees, although this is just exemplary and other angles would be acceptable. As a result, the cone angle of the tooth tip is approximately 60 degrees. Currently it is envisaged that cone angles between 30 and 60 degrees would be acceptable, by way of non-limiting example. As will be appreciated from Figures 8a and 8b, the tip region 56 is symmetrical about tooth axis B in this example.

The presence of the shoulders 310 mean that a step is formed between the upper end of the tooth body 302 and the flanks 320. As such, a flank line 330 corresponding to a medial tangent to the tooth flank 320 as seen in Figure 8a intersects a volume of the tooth body 302.

The shoulder 310 provides a curved, rounded or concave transition between the top of the tooth body 302 and the angled flank 320. As can be seen, the axially lower end of the shoulder 312 is horizontal, from which point the shoulder 310 curves upwardly through the lower transition section 326 to blend into the flank 320 The curvature of the transition section 326 may be radiussed. The shoulder 312 and transition section 326 may be machined more finely than the tooth flank 320.

An advantage of the provision of the shoulders 310 with respect to the tooth flanks 320 may be that splash losses in the contact of the tooth element with the gear profile may be reduced. The surface area of the tooth flank may in particular be reduced by the shoulders 310, whereby lubricating oil needs to be displaced from a smaller surface.

The tooth elements of the invention may be any suitable material, but currently it is envisaged that a suitable grade of stainless steel is most appropriate in high load applications. However, in other applications materials other than steel may be appropriate such as plastics. Similar considerations apply for the material of the outer ring gear, the input member and the output member. At least a part of the tooth element is configured to be flexurally rigid. The term "flexurally rigid" should in this case be typically understood technically to mean that bending deformations of the teeth are so small due to the rigidity of the material of the teeth that they are at least substantially unimportant for the kinematics of the gearing. Flexurally rigid teeth comprise in particular teeth made of a metal alloy, in particular steel, or a titanium alloy, a nickel alloy or any other alloys. Furthermore, flexurally rigid teeth of plastics may also be provided, in particular in transmissions in which the outer gear ring and the input/output member are also made of plastics. Metal/alloy components offer the advantage that they are extremely torsionally rigid and withstand high loads. Gearings of plastics offer the advantage that they have a low weight. The term "flexurally rigid" means in particular a flexural rigidity about a transverse axis of the tooth. This means in particular, that when the tooth is viewed as a rod from a tooth base to a tooth flank area, a flexural rigidity is given at least substantially excluding bending deformations between the tooth flank area and the tooth base. Due to the flexural rigidity, a very high resistance to load and torsional rigidity of the gearing are achieved.

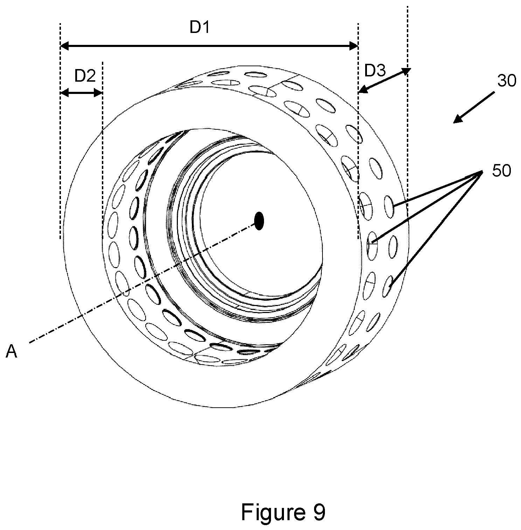

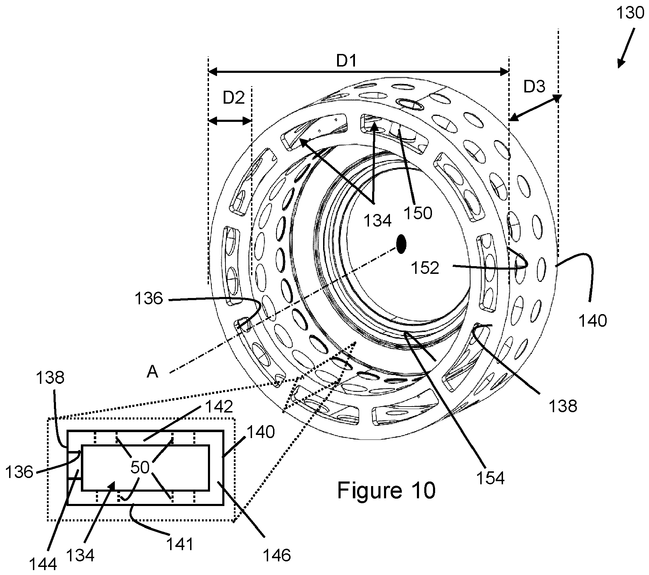

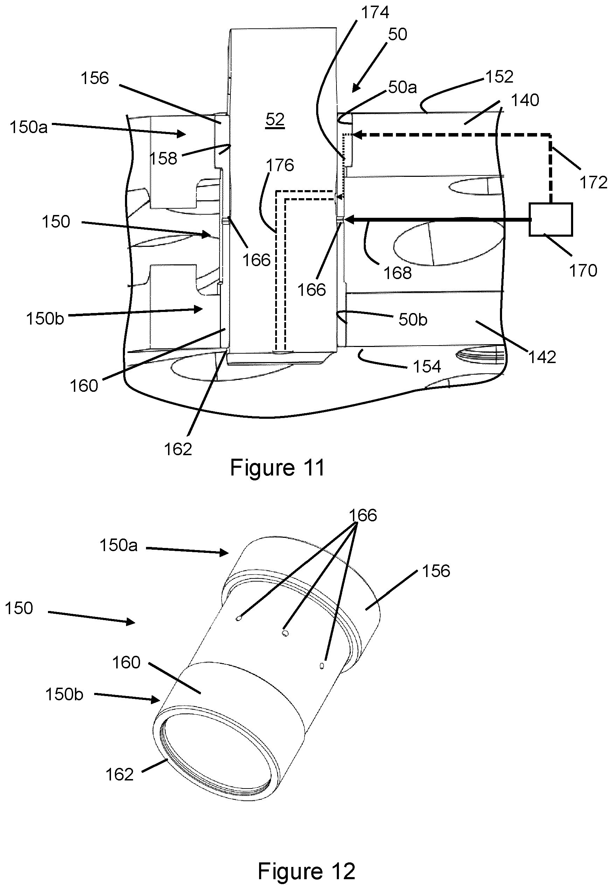

Having discussed various aspects of the transmission, the discussion will now focus on a configuration of the first drive member or 'input member', which will now be referred to as a tooth carrier member 130. Reference will be made to Figure 10, which shows an overall view of an example of the tooth carrier member 130 in accordance with the invention, in comparison with a tooth carrier member 30 in Figure 9 which does not form part of the invention. Reference will also be made to Figures 11 to 13 which show aspects of the tooth carrier member 130 in more detail. Parts in common with previous examples of the invention may be referred to with like reference numerals.

As can be seen in Figure 9, the tooth carrier member 30 is made from a solid block of material, for example a bearing grade steel, and is machined appropriately to define the circumferentially-arranged tooth apertures or guide bores 50.

Due to the strength required of the tooth carrier member 30 to support and constrain radial reciprocating movement of the tooth elements (not shown in Figure 9), the tooth carrier member 30 is preferably fabricated from a high grade steel such as bearing steel. This means that the tooth apertures 50 are strong enough to accommodate the various forces generated by the tooth elements 52 as they are driven in an axial sliding motion by the outer ring gear 34 (not shown in Figs 9 and 10). Although fabricating the tooth carrier member 30 from a single piece of steel provides high strength, this is at the expense of correspondingly high mass.

Figure 10 shows an example of a tooth carrier member 130 in accordance with the invention which addresses this issue. by comparing the dimensions of the tooth carrier member 130 in Figure 10 with the tooth carrier member 30 in Figure 9, it will be appreciated that the tooth carrier member 132 has the same annular shape and that the major dimensions are the same. In the illustrated example, the outer diameter D1, the wall thickness D2 taken in a plane perpendicular to the rotational axis A, and the axial length D3 of the tooth carrier members 30, 130 in Figures 9 and 10 are equal. However, importantly, the tooth carrier member 130 in Figure 10 comprises mass-reducing features in the form of at least one hollow interior chamber 134. Note that the at least one interior chamber are in addition to the radially arranged guide apertures 50.

In the illustrated example of Figure 10, a single interior chamber 134 is depicted, which is configured to extend about the rotational axis A. The internal shape and dimensions of the interior chamber 134 are such that the tooth carrier member 132 has a mass distribution such that it is rotationally balanced about the rotational axis A.

Where a plurality of individual and separated interior chambers 134 are provided, they should be distributed circumferentially about the rotational axis A and shaped/dimensioned to retain rotational balance of the tooth carrier member 132.

The internal volume of the interior chamber 134 or multiple chambers is configured to reduce the mass of the tooth carrier member 130 in a manner that does not compromise its structural integrity. Without wishing to be bound by theory, it is currently envisaged that the interior chamber or chambers may be configured to have a combined volume that achieves a mass reduction of between 20% and 80%. The mass reduction may also be in the range of 30% and 60%, or between 40% and 50%. In this respect, the achieved mass reduction may be approximately 20%, or 30%, or 40%, or 50%, or 60% or 70% or 80%, or values between these points. It should be noted that the mass reduction achieved is to be compared with the equivalent carrier member where the interior chamber is instead of a solid mass.

In view of the range of values of mass reduction that is believed to be achievable through the invention, the volume of the interior chambers compared to the volume of space occupied by the external dimensions of the tooth carrier member is considered to be comparable to the mass reduction values expressed above. In this context, it is to be noted that the volume of the interior chamber or chambers is in addition to the volume represented by the guide apertures 50, which would also be present on a carrier member without the interior chambers in accordance with the invention. Moreover, by reference to the external dimensions of the carrier member, or the volume of space occupied by the carrier member, it is meant the volume of solid mass of the carrier member as defined by the surfaces of the solid mass.

In some examples, the one or more interior chambers 134 may not be visible from the exterior of the tooth carrier member 130. However, in the illustrated example, the interior chamber 134 penetrates an external surface of the tooth carrier member 130 to define at least one opening 136 therein. More specifically, the interior chamber 134 penetrates at least one axial facing surface 138,140 of the tooth carrier member 130. A plurality of such openings 136 are shown in the illustrated example. The openings 136 are shown here as elongated in form, so as to resemble a rectangle following a gentle arc.

As can be seen, the tooth carrier member 130 has a structure that defines a radially outer ring 141 and a radially inner ring 142. The outer and inner rings 140,142 are connected by first and second axial walls 144,146. In cross section, therefore, the structure of the tooth carrier member 130 is generally box-shaped in form, as can be appreciated from the inset panel in Figure 10.

Referring now to Figures 11 and 12, the internal structure and layout of the interior chamber 134 as illustrated is such that it overlaps the guide apertures 50, thereby dividing them into a first aperture portion 50a and a second aperture portion 50b. The two portions 50a,50b are spaced apart in the radial direction.

In principle, the spaced first and second aperture portions 50a,50b may provide adequate support and guidance to the respective tooth elements. However, as an additional support feature for the tooth elements, the apertures 50 may be formed at least in part by insert members 150. As can be seen, the insert members 150 are generally cylindrical or sleeve-shaped in form and fit within the aperture 50 defined by the tooth carrier member 130. Only one such sleeve member 150 is shown in Figure 10. The insert members 150 will hereinafter be referred to as 'sleeve inserts'.

The length of the sleeve insert 150 may be such that it extends from a radial outer surface 152 to a radial inner surface 154 of the tooth carrier member 130. Therefore, upper and lower ends 150a,150b of the sleeve insert 150 sit flush with the corresponding surfaces 152,154 of the tooth carrier member 130.

The sleeve insert 150 is provided with a circumferential collar 156, in this example, which is sized to fit the upper end 150a of the sleeve insert 150 within an enlarged diameter portion 158 of the aperture 50. The collar 156 and the enlarged diameter portion 158 are dimensioned to locate the sleeve insert 150 into the correct position. Optionally, a lower collar 160 serves to locate the lower end 150b of the sleeve insert 150 in the aperture 50 of the carrier member 130.

The lower end 150b of the sleeve insert 150 defines a leading edge 162. That leading edge 162 may have a radiused or rounded inner profile.

The sleeve insert 150 provides useful options for providing lubrication fluid to the tooth element 52.

A first option is that one or more lubrication ports can be provided in the wall of the sleeve insert. As shown, a plurality of lubrication ports 166 are distributed about the circumference of the sleeve insert 150. The lubrication ports 166 penetrate the wall thickness and so provide a route for lubrication fluid to pass from the outside to the inside of the sleeve insert 150. The ports 166 are shown in a linear arrangement in the Figures, although this is not essential.

The lubrication ports 166 are provided in a mid-region of the sleeve insert 150 and so are accessible from the interior chamber 134 of the tooth carrier member 130. This may provide advantages in term of supplying lubrication fluid to the sleeve insert 150. As shown schematically a fluid supply line 168 can be accommodated within the interior chamber 134 to provide lubrication fluid from a supply system 170 to the lubrication ports 166 of the sleeve insert 150.

A second option is that the lubrication ports 166 may be supplied with lubrication fluid through a respective fluid supply passage 172 that extends through one of the radially outer or inner rings 140,142 of the carrier member 130. Here the fluid supply passage 172 can be seen in Figure 11 as extending through the radially outer ring 140 to the upper collar section 156 of the sleeve insert 150. A further passage 174 internal to the sleeve insert 150 transports fluid to the centre of the sleeve insert 150 where it can be applied to the outer surface of the tooth element 52, in use. Optionally, internal tooth passages 176 may be provided through the tooth element 52 which are able to convey lubrication fluid to different parts of the tooth element 52.

A particular benefit of providing the tooth carrier member 130 with sleeve inserts 150 for the purposes of supporting and guiding sliding movement of the tooth elements 52 is that a lower steel grade and/or a lower density and/or lower cost material can be used for the main body of the tooth carrier member 130 whilst the sleeve insert 150 can be made of higher quality material that has better wear resistant properties.

For example, the tooth carrier member 130 may be manufactured from a cheaper cast material, whilst the sleeve inserts 150 can be manufactured from a higher grade bearing steel. This results in a reduced manufacturing cost. Furthermore, appropriate surface hardening techniques need only be carried out on the sleeve inserts 150 which are physically much smaller than the tooth carrier member 130 which means that such finishing processes can be carried out more readily and cost effectively.

As an example of material choices, the tooth carrier member 130 may be manufactured from ductile iron e.g. grades 500, 600 or 700, whilst the sleeve inserts 150 may be manufactured from 100/102cr6 bearing steel. Thus, it will be appreciated that the sleeve inserts would be made from steel having a higher strength grade compared to the steel of the tooth carrier member.

In applications for which a high loading requirement is not so crucial, it is envisaged that dissimilar materials may be used for the tooth carrier member 130 and the sleeve insert members 150. For example the tooth carrier member 130 may be formed from a suitable polymeric material whilst the sleeve insert member 150 may be formed of steel. Alternatively the sleeve inserts may be formed from a suitable engineering plastics such as PEEK or Nylon which would provide useful wear resistive properties.

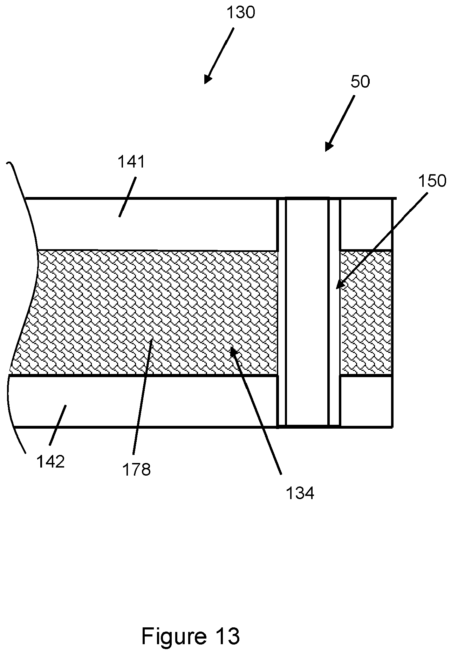

Another variant is shown in Figure 13 in schematic form, in which the same reference numbers are used to refer to the same parts. Here, the interior chamber 134 of the tooth carrier member 130 accommodates, at least partially, a low density filler material 178. The filler material 178 may be for example a metal foam or a polymeric foam. The foamed material may be open cell or closed cell foam.

The filler material 178 may be inserted in the or each interior chamber 134 so as to fill the entire volume, or only a part of that volume. The filler material 178 may provide support for other components that are positioned in the interior chamber 134 such as lubrication fluid pipework. It can also provide a sound deadening function.

Many modifications may be made to the specific examples described above without departing from the scope of the invention as defined in the accompanying claims. Features of one embodiment may also be used in other embodiments, either as an addition to such embodiment or as a replacement thereof.

In the above discussion, the speed increasing transmission has been described as used in a wind turbine powertrain as a means of increasing the rotational speed of the main shaft to a speed suitable for an input shaft of an electrical generator.

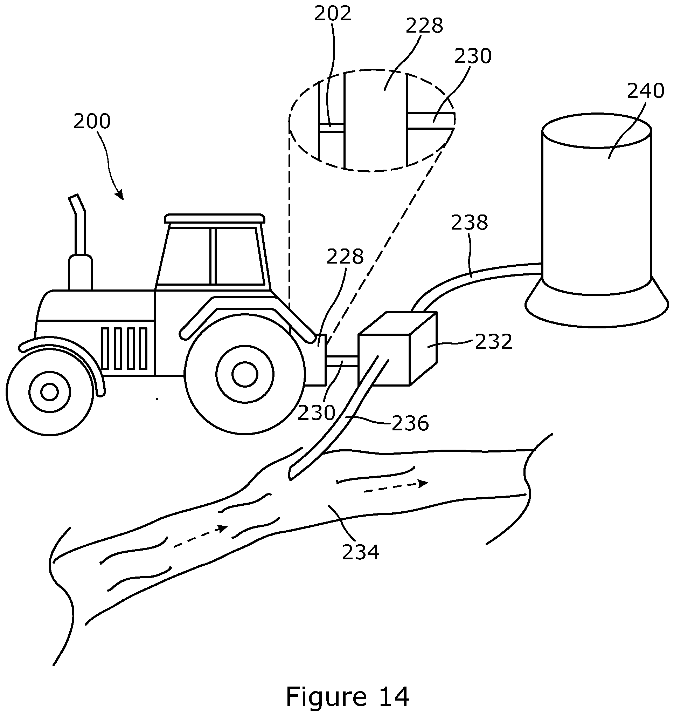

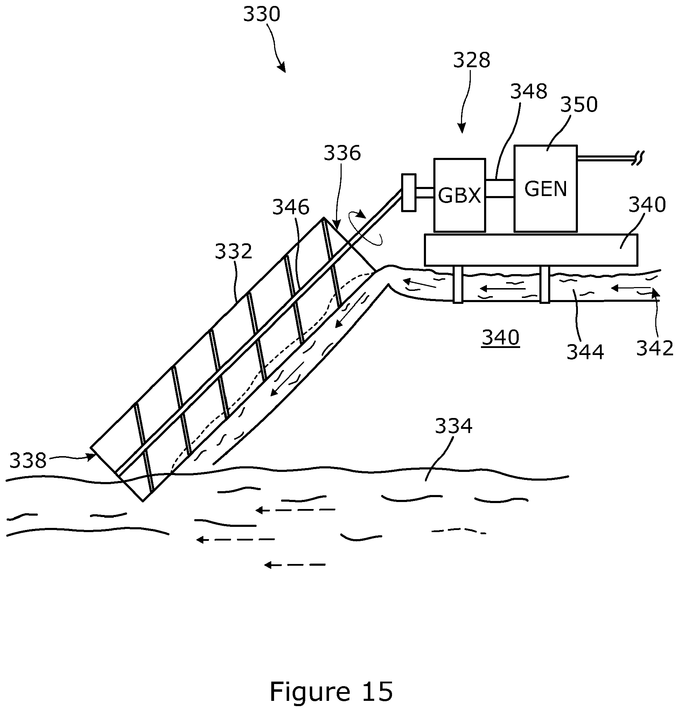

The skilled person would understand that this is not the only application for such a transmission. Figures 14 and 15 illustrate two further applications, by way of example, within which the transmission may be used. In the following discussion, the internal details and functionality of the transmission can be assumed to be the same as described above.

With reference firstly to Figure 14, the transmission of the invention may be used in agricultural gearbox applications. For example, here an agricultural machine such as a tractor 200 provides a power take off coupling 202, which is a rotating shaft that is driven by the engine of the tractor 200, as is known in the art. The power takeoff coupling 202 may typically be driven at between 200 and 600 rpm, and is dependent on engine speed. For some agricultural applications, that rotational speed may be sufficient. However, for other applications a higher rotational speed may be required. Therefore, in Figure 14 a transmission 228 according to the invention is provided that receives as a drive input the power take off coupling 202 from the tractor 200. Here, the transmission 228 is shown attached to the tractor 200, but this is not essential, particularly if mobility is not required. The transmission 228 converts the relatively high torque and low speed drive input from the power take off coupling 202 to a higher speed but lower torque drive input 230 to a hydraulic pump 232. As an example, the rated running speed of the pump may be between 1200 and 2000 rpm. The hydraulic pump 232 may be a gear pump or any other suitable form of pump. In the illustrated application, the pump 232 is used to draw water from a nearby stream 234 through an input pipe 236 and pump the water through an outlet pipe 238 to a water storage container 240.

Beneficially, the technical advantages of the transmission of the invention such as low backlash and smooth operation minimises further vibration on the power take off coupling 202 and reduces operational noise for the operator of the machinery.

A further application is shown in Figure 15 in which a transmission 328 according to the invention is integrated into a hydrodynamic power generation system 330.

The generation system 330 includes a so-called Archimedes screw device 332 arranged at an inclined angle with respect to a flowing body of water such as a river or stream 334. An inlet 336 of the screw device 332 is arranged at an upper end, and a discharge or outlet 338 is arranged at the lower end thereof. The general form of screw device is conventional.

A suitable structure 340 is provided to create a feed channel 342 through which is fed a flow of water 344 to the inlet 336 of the screw device 332 which causes it to turn, as is well known. The structure 340 may be an earth or concrete bank, for example, but other structures are possible.

The screw device 332 comprises a drive shaft 346 which supports the screw device 332 on suitable bearings (not shown) and which provides an output drive. The drive shaft 346 is connected to the gearbox or transmission 328 in accordance with the invention. Since the screw device 332 only has a low rate of rotation, for example 0.2 to 1Hz, the transmission 328 provides a speed increasing function. As such, the transmission 328 includes an output drive shaft 348 which is coupled to an electrical generator 350.

It will be appreciated that the compact arrangement of the transmission according to the invention, and other advantageous characteristics such as low noise and low backlash, make it beneficial for such applications where installation space is at a premium. In addition, the low backlash and smooth operations reduces wear on the other components included in the powertrain.

In the examples of the invention discussed above and shown in the accompanying Figures, the transmission has been described as a speed increasing transmission wherein the input member 30 receives rotational drive from the main shaft of the wind turbine at a relatively low speed, and the output member 32 provides a higher rotational output speed to the generator 26. Although this is the application currently envisaged for the transmission, which will be technically advantageous for applications outside wind turbines, as is evidenced by Figure 13 and 14, it should be noted here that the transmission of the invention could also be 'back driven', meaning that it could be used as a speed reducer transmission. In such a situation, therefore, the radially inner output member 32 as described above may receive rotational drive from a prime mover, e.g. such as an internal combustion engine or electric motor, having a relatively high rotational speed and relatively low torque, whereas the radially outer input member 30 as described above would then provide the onwards drive to a load, for example a vehicle drive train or hoisting system, having a lower output speed but higher torque. In this context, therefore, the input member 30 of the transmission may be considered more generically as a first drive member whereas the output member 32 may be considered more generically as a second drive member.

This invention is most preferred in mainly one-direction applications, which will often be high torque applications, for example the wind turbine applications discussed above. However, the present invention may also find use in other areas where it is desired to have high power density, high torque density, large hollow shaft ratio, advantageous damping behaviour, high rigidity, zero or reduced play or backlash, high synchronization, or in general a compact design. Even for two-direction applications, such as robotics, machine tools, industrial drive-trains, servo-motor-torque-speed-downs, packaging machines and milling machines the present invention will also be an improvement over the known prior art.

## Claims

1. A transmission comprising:
a fixed gear ring (34);
a first drive member (130) rotationally supported within the fixed gear ring (34), the first drive member (34) defining a plurality of radially arranged apertures (50) each of which accommodates a tooth element (52), each tooth element (52) having a tooth tip region (56) and a tooth base (58), the first drive member (130) comprising a radially outer face (29) and a radially inner face (31), and wherein the tooth tips (58) of the tooth elements (52) engage a corresponding gear profile (40) defined by the fixed gear ring (34), and
a second drive member (32) which is rotationally supported such that it extends within the first drive member (30), the second drive member defining a cam profile (61) which engages each of the plurality of tooth elements, and wherein the first drive member (130) further comprises one or more interior chambers (134).

2. The transmission of Claim 1, wherein the one or more interior chambers (134) overlap at least one of the apertures (50), thereby dividing the at least one of the apertures (50) into a first aperture portion (50a) and a second aperture portion (50b).

3. The transmission of Claims 1 or 2, wherein the one or more interior chambers (134) accommodate a filter material (178).

4. The transmission of Claim 3, wherein the filler material (178) is a foam.

5. The transmission of Claim 4, wherein the foam is selected from a metal foam or a polymeric foam.

6. The transmission of any one of the preceding claims, wherein the one or more interior chambers (134) penetrates an external surface (29,31) of the first drive member to define an opening (136) therein.

7. The transmission of any one of the preceding claims, wherein the plurality of apertures (50) are defined at least in part by respective sleeve members (150) that are separate components to the first drive member (130).

8. The transmission of Claim 7, wherein the sleeve members extend from the radial outer face (29) of the first drive member (30) to the radial inner face (31) of the first drive member (30).

9. The transmission of Claims 7 or 8, wherein the sleeve members include a lubrication port to enable lubricating fluid to be provided to the respective tooth member.

10. The transmission of any one of Claims 7 to 9, wherein the first drive member and the sleeve members are both steel, and wherein the sleeve member is made from steel having a higher strength grade compared to the steel of the first drive member.

11. The transmission of any one of Claims 7 to 9, wherein the sleeve members are formed from bearing steel and wherein the first drive member is formed from a dissimilar material to the sleeve members.

12. The transmission of any one of the preceding claims, wherein the one or more interior chambers have a combined volume that is between 20% and 80%, and preferably between 30% and 60%of the volume of space occupied by the exterior dimensions of the first drive member (30).

13. The transmission of any one of the preceding claims, wherein the first drive member (130) is an input member and the second drive member (32) is an output member, wherein the output member is acted on and driven by the tooth base (58) of each of the plurality of tooth elements (32) thereby to cause rotation of the output member (32).

14. A wind turbine (10) including a tower (12) on which is mounted a nacelle (14) that supports a rotatable hub (16), wherein the rotatable hub is coupled to a transmission in accordance with any one of the preceding claims.
